# FASCICULE DE BREVET EUROPEEN

(11) **EP 2 878 071 B1**
(45) Date de publication et mention de la délivrance du brevet: **20.09.2017**
(21) Numéro de dépôt: 13756545.3
(22) Date de dépôt: 18.07.2013
(51) Int. Cl.: H02K 15/04, H02K 1/27, H02K 3/12, H02K 21/24, H02K 21/22

(54) **BOBINAGE POUR UN ÉLÉMENT STATOR D'UN MOTEUR OU GÉNÉRATRICE À AIMANTS PERMANENTS À AU MOINS UNE BRANCHE RIGIDE ET D'UN SEUL TENANT ET SON PROCÉDÉ DE FABRICATION**
WICKLUNG FÜR EIN STATORELEMENT EINES PERMANENTMAGNETMOTORS ODER GENERATORS MIT MINDESTENS EINEM EINKOMPONENTIGEN STARREN GLIED UND HERSTELLUNGSVERFAHREN DAFÜR
WINDING FOR A STATOR ELEMENT OF A PERMANENT-MAGNET MOTOR OR GENERATOR, COMPRISING AT LEAST ONE SINGLE-COMPONENT, RIGID LIMB, AND METHOD FOR PRODUCING SAME

(30) Priorité: 25.07.2012 FR 1257220; 23.11.2012 FR 1203208
(43) Date de publication de la demande: 03.06.2015
(73) Titulaire: Whylot SAS, 46100 Cambes (FR)
(72) Inventeur: Ravaud Romain, F-46100 Corn (FR); Gaiani Robert, F-46100 Figeac (FR)
(86) Numéro de dépôt international: PCT/FR2013/000197
(87) Numéro de publication internationale: WO 2014/016475

(56) Documents cités:
- FR-A1- 2 808 936
- US-A- 4 319 152
- US-A- 4 894 907
- US-B1- 6 768 239
- US-B1- 7 005 772

## Description

La présente demande bénéficie de la priorité de la demande de brevet français FR/1257220 avec comme date de dépôt le 25 juillet 2012.

### Domaine technique

La présente invention concerne un bobinage pour un élément stator d'un moteur ou génératrice à aimants permanents à au moins une branche rigide et d'un seul tenant. Elle concerne aussi un moteur ou une génératrice électromagnétique à aimants permanents comprenant un rotor et un stator pourvu d'un tel bobinage. Elle concerne enfin un procédé de fabrication d'un tel bobinage.

Le domaine de l'invention est plus particulièrement mais de manière non limitative celui des moteurs ou génératrices électromagnétiques à aimants permanents.

### Etat de la technique antérieure

On connaît dans l'art antérieur des moteurs ou génératrices électromagnétiques à aimants permanents, notamment les moteurs dits sans balais ou en anglais « brushless ». Ces moteurs ou génératrices dits aussi synchrones présentent un rotor portant un ou plusieurs aimants permanents et un stator équipé d'un bobinage.

Le bobinage peut se décomposer en autant de branches que de phases du courant électrique utilisées pour faire fonctionner le moteur. Il est aussi possible de prévoir plusieurs branches pour une même phase du courant.

Selon l'état de la technique, un tel bobinage est généralement réalisé par enroulements multiples d'un faisceau de conducteurs qui viennent se superposer les uns sur les autres. Un tel bobinage est décrit dans le document FR-A-2 808 936. Un inconvénient d'un tel bobinage est qu'il est long et fastidieux à réaliser, puisqu'il faut enrouler une grande longueur de fil conducteur, tout en assurant un bon équilibrage des résistances ohmiques associées à chaque phase du courant électrique utilisée.

En particulier, on doit maîtriser les valeurs des sections de bobinage par exemple pour assurer que les sections de bobinage associées à chaque phase soient égales les unes aux autres. En outre, il est difficile de réaliser ainsi un bobinage tel que les champs magnétiques auxquels est soumis un stator dans un moteur à aimants permanents soient équilibrés.

Le document US-A-4 319 152 montre un bobinage comprenant au moins deux branches conductrices entrelacées correspondant chacune à une phase d'un courant électrique, chacune des branches étant rigide et d'un seul tenant, chacune des branches étant formée de créneaux, chaque créneau comprenant un sommet encadré par au moins un segment latéral à chacune de ses extrémités et une base raccordant le créneau à un créneau adjacent de la branche, chaque segment latéral raccordant une partie d'extrémité du sommet à une partie d'extrémité de la base.

Si ce document permet en partie de simplifier la fabrication d'un bobinage par rapport à un bobinage par enroulements multiples d'un faisceau de conducteurs qui viennent se superposer les uns sur les autres, un tel bobinage ne permet pas un équilibrage des champs magnétiques auxquels est soumis un stator dans un moteur à aimants permanents avec un tel positionnement des branches du bobinage l'une par rapport à l'autre. Le document US 6,768,239 divulgue un bobinage pour un élément stator d'un moteur électrique à aimants permanents, comprenant des branches conductrices entrelacées correspondant chacune à une phase d'un courant électrique, chaque branche étant rigide et réalisée par usinage dans la masse. Un ensemble de branches entrelacées formant des créneaux pour un bobinage de stator de machine électrique est décrit dans le document US 7,005,772.

Le document FR 2808936 divulgue une structure de bobinage en branches comportant des créneaux, les créneaux d'une branche étant décalés sur un pourtour du bobinage par rapport aux autres branches. Un objectif de la présente invention est de remédier aux inconvénients des bobinages connus pour un élément stator d'un moteur ou génératrice électromagnétique à aimants permanents.

En particulier, un objectif de la présente invention est de proposer un bobinage pour un élément stator ou rotor d'un moteur ou génératrice électromagnétique à aimants permanents, qui soit facile de fabrication et permette de réaliser un bon équilibrage des champs magnétiques auxquels est soumis un élément stator dans un moteur ou une génératrice électromagnétique à aimants permanents comprenant un tel bobinage.

### Exposé de l'invention

Cet objectif est atteint avec un procédé de fabrication d'un bobinage pour un élément stator d'un moteur ou génératrice électromagnétique à aimants permanents, le bobinage comprenant au moins deux branches conductrices entrelacées correspondant chacune à une phase d'un courant électrique, lesdites au moins deux branches étant rigides et fabriquées à partir d'une même ébauche d'au moins un matériau par enlèvement de matière. Le procédé est caractérisé en ce que l'enlèvement de matière se fait de sorte à réaliser des créneaux sur les branches avec des sommets et des segments latéraux des créneaux d'une même branche compris dans un même plan, les plans des branches ainsi définis étant superposés, une première branche présentant les sommets de ses créneaux à un niveau supérieur au plan comprenant les sommets des créneaux d'une deuxième branche avec un décalage sur un pourtour du bobinage entre les créneaux d'une branche par rapport à l'autre, la première branche présentant les bases de ses créneaux à un niveau inférieur sur le bobinage à celui des bases des créneaux de la deuxième branche, l'ensemble des créneaux formant le corps de la branche. Avantageusement, le procédé se fait par usinage ou électroérosion par commande numérique.

L'invention concerne aussi un bobinage comprenant au moins deux branches conductrices entrelacées correspondant chacune à une phase d'un courant électrique, chacune des branches étant rigide et d'un seul tenant, le bobinage étant obtenu conformément à un tel procédé, chacune des branches étant formée de créneaux, chaque créneau comprenant un sommet encadré par au moins un segment latéral à chacune de ses extrémités et une base raccordant le créneau à un créneau adjacent de la branche, chaque segment latéral raccordant une partie d'extrémité du sommet à une partie d'extrémité de la base, un décalage sur un pourtour du bobinage existant entre les créneaux d'une branche par rapport à l'autre, caractérisé en ce que les sommets et les segments latéraux d'une même branche sont compris dans un même plan, les plans des branches ainsi définis étant superposés, une première branche présentant les sommets de ses créneaux à un niveau supérieur au plan comprenant les sommets des créneaux d'une deuxième branche, la première branche présentant les bases de ses créneaux à un niveau inférieur sur le bobinage à celui des bases des créneaux de la deuxième branche, l'ensemble des créneaux formant le corps de la branche.

Par « branche conductrice », on entend une branche faite d'un matériau conducteur d'électricité tel que l'aluminium, le cuivre, l'argent, ou tout autre matériau électriquement bon conducteur.

Par « corps massif d'un seul tenant » on considère que la branche du bobinage présente un corps principal fait d'une seule pièce en ne comprenant aucun moyen de liaison interne, par exemple collage, soudage. Par contre, sur ce corps massif peuvent être avantageusement rajoutés des éléments auxiliaires, par exemple des segments latéraux auxiliaires d'un créneau pour une série de créneaux formant la branche, ce ou ces segments latéraux auxiliaires étant électriquement en parallèle d'un segment latéral faisant partie intégrante du corps de la branche.

Ainsi, on peut facilement contrôler la section du bobinage en chacun de ses points, notamment sur l'ensemble des portions de bobinage qui travailleront magnétiquement. On peut ainsi maîtriser une longueur surfacique du bobinage (rapport entre la longueur et la section d'un tronçon de bobinage), notamment sur l'ensemble des portions de bobinage qui travailleront magnétiquement. De cette façon, la résistance ohmique de chaque phase peut être équilibrée, en particulier sur l'ensemble des portions de bobinage qui travailleront magnétiquement.

En outre, on peut ainsi réaliser facilement un bobinage de sorte qu'un élément d'un moteur ou génératrice électromagnétique à aimants permanents (ledit élément comprenant lesdits aimants permanents) soit soumis à des champs magnétiques équilibrés. On réalise un bobinage à l'aide d'un monoconducteur plutôt qu'à l'aide d'un faisceau de conducteurs. Ceci peut par exemple permettre de réduire la résistance ohmique du bobinage.

En outre, la réalisation des branches de bobinage dans une même pièce massique améliore sa résistance mécanique. C'est tout le bobinage qui est rigide et d'un seul tenant en présentant un corps massif commun à toutes les branches.

Avantageusement, le bobinage comprend n branches rigides et d'un seul tenant, avec pour x supérieur à 1 et inférieur à n, la xiéme branche des n branches présentant ses sommets à un niveau supérieur à celui des sommets de la x+1ième branche et à un niveau inférieur à celui des sommets de la x-1ième branche, les bases de la xième branche étant à un niveau supérieur à celui des bases de la x-1ième branche et à un niveau inférieur à celui des bases de la x+1ième branche.

Avantageusement, chaque sommet d'une branche supérieure ou chaque base d'une branche inférieure présente une échancrure pour le passage d'un segment latéral d'un créneau d'une branche inférieure ou respectivement d'un segment latéral d'un créneau d'une branche supérieure.

Avantageusement, les segments latéraux des créneaux des branches sont inclinés dans le sens de la hauteur du bobinage vers la base associée des créneaux.

Avantageusement, les segments latéraux des créneaux des branches sont disposés dans le même plan que le sommet associé des créneaux, un dénivelé étant prévu sur chaque extrémité de la base pour sa liaison avec l'extrémité en regard du segment latéral associé.

Avantageusement, au moins pour un créneau, il est prévu au moins un segment latéral auxiliaire raccordé à la même extrémité d'un sommet qu'un segment latéral faisant partie du corps de la branche. Dans un conducteur, la partie centrale ne conduit pas le courant et est donc inutile pour la conduction électrique. De plus, il se crée à l'intérieur du conducteur des pertes par courants de Foucault, pertes qui augmentent avec la section du conducteur. Il est donc préférable, pour limiter les pertes d'énergie et l'encombrement, d'avoir plusieurs conducteurs de petite section en parallèle qu'un unique conducteur de grosse section.

Avantageusement, ledit au moins un segment latéral auxiliaire est rigide et d'un même tenant avec le corps de la branche le portant.

Dans une autre alternative, ledit au moins un segment latéral auxiliaire est raccordé par un moyen de solidarisation avec son sommet associé.

Avantageusement, les segments latéraux associés à une même extrémité présentent une ou plusieurs des caractéristiques suivantes : des sections différentes, des orientations différentes ou des matériaux différents.

Avantageusement, le bobinage est formé de trois branches conductrices correspondant chacune à une phase d'un courant électrique triphasé. Ce mode de réalisation présente l'avantage d'être adapté à un courant triphasé tel qu'il est généralement fourni par les fournisseurs d'électricité.

L'invention concerne aussi un moteur ou génératrice électromagnétique à aimants permanents comprenant au moins un rotor et au moins un stator, caractérisé en ce qu'il comprend au moins un tel bobinage.

Avantageusement, le moteur est un moteur ou une génératrice électromagnétique à flux axial, ledit au moins un bobinage présentant une forme de cylindre. Dans une autre forme de réalisation le moteur ou la génératrice peut être un moteur ou une génératrice électromagnétique à flux radial, ledit au moins un bobinage présentant une forme de couronne.

Dans le cas d'un moteur ou génératrice électromagnétique à flux axial, les segments latéraux des créneaux sont alors avantageusement parallèles entre eux et situés sur la face latérale du cylindre. De cette façon, les différents segments latéraux sont à la même distance d'aimants permanents avec lesquels le bobinage peut coopérer dans le moteur ou la génératrice électromagnétique. Ainsi, les différentes phases associées à différentes branches du bobinage créent des champs magnétiques de même valeur absolue pour lesdits aimants permanents.

Dans les deux cas, les branches sont intercalées ensemble de sorte que les segments latéraux de chacune des branches se succèdent périodiquement, où une période comprend une suite d'un segment latéral de chaque branche. Les segments latéraux sont régulièrement espacés les uns des autres, c'est-à-dire que l'intervalle entre deux segments latéraux voisins est constant sur tout le pourtour du bobinage. Les créneaux des différentes branches sont donc décalés les uns des autres d'une valeur qui dépend notamment du nombre de branches.

Avantageusement, le ou les stators du moteur ou de la génératrice comprennent un anneau plat pourvu d'encoches situées dans le plan de l'anneau faisant face au rotor associé, au moins un bobinage étant imbriqué dans ces encoches.

Avantageusement, ledit au moins un bobinage est moulé dans un liant isolant, par exemple une résine isolante puis logé dans le ou les stators, le rotor étant à aimants permanents et réalisé en fibre de verre.

Avantageusement, le moteur ou la génératrice selon l'invention présente une structure multi-entrefers. En particulier, il peut présenter deux entrefers au moins, et même trois entrefers au moins. En effet, on peut envisager des formes de bobinages complexes telles que des formes requises pour mettre en oeuvre une telle structure multi-entrefers, notamment à trois entrefers ou plus.

De préférence, les encoches sont dimensionnées en correspondance avec le bobinage, les portions de bobinage passant dans les encoches étant magnétiquement actives. Avantageusement, le stator est formé de tôles magnétiques feuilletées.

Selon une variante, le stator reçoit le bobinage en étant d'un matériau non magnétique. Le matériau non magnétique peut comprendre un plastique, une résine, du bois, etc.

On a l'habitude d'enrouler les bobinages sur un matériau magnétique, afin de canaliser le champ magnétique créé et fournir ainsi un moteur ou une génératrice électromagnétique ayant un couple important. Cependant, cela présente l'inconvénient de créer également de fortes pertes énergétiques, notamment par effet Joule et des pertes en fer par hystérésis ou courants de Foucault. L'idée à la base de cette variante est d'accepter une certaine perte de couple en vue d'obtenir un rendement énergétique optimisé. Selon un mode de réalisation particulier, le stator est double, les deux stators ayant chacun leur bobinage et encadrant le rotor.

On peut ainsi multiplier par deux le couple offert par le moteur ou la génératrice selon l'invention.

Le ou les rotors peuvent comprendre des aimants permanents fixés dans un matériau composite, tel qu'un matériau composite à base de fibres de verre. Un avantage d'un rotor en matériau composite est qu'il est léger, typiquement cinq fois plus léger que l'acier. On réalise ainsi un rotor présentant moins d'inertie. On peut réaliser de plus grandes accélérations grâce à un tel rotor. Le matériau composite est avantageusement un matériau non conducteur d'électricité, tel qu'un matériau composite à base de fibres de verre.

L'avantage d'un rotor en matériau non conducteur d'électricité est qu'on s'affranchit des pertes qui peuvent survenir par l'apparition de courants parasites dans le rotor du fait des champs magnétiques variables auquel il est soumis. Ces courants parasites créent des pertes énergétiques. En outre, ces courants parasites peuvent venir s'opposer aux effets recherchés créés par les courants électriques qui traversent les bobinages.

Le matériau composite peut comprendre des fibres orientées avec plusieurs orientations dans l'espace. Un avantage d'un matériau composite fibré est qu'il présente une excellente tenue mécanique. On peut donc sans risque atteindre des vitesses de rotation élevées du rotor. En outre, on peut améliorer cette tenue mécanique grâce à la fixation par frettage des aimants permanents sur le rotor.

L'invention concerne aussi l'utilisation d'un tel moteur ou génératrice, caractérisée en ce qu'elle s'effectue en association avec une enceinte fermée, le moteur ou la génératrice étant placé à l'intérieur ou à l'extérieur de ladite enceinte, le moteur ou la génératrice étant sous vide ou à pression supérieure à 2 bars ou à une température inférieure à 0°C ou supérieure à 60°C. Le moteur ou la génératrice est alors utilisé pour la régulation en température et/ou en pression de l'intérieur de l'enceinte fermée.

Il a en effet été constaté qu'un moteur ou une génératrice avec au moins un tel bobinage était très résistant dans des conditions de fonctionnement non ambiantes. De manière non limitative, ceci permet, par exemple une utilisation du moteur ou de la génératrice en association avec des espaces fermés sous pression ou sous haute température par exemple comme un four et notamment une cellule de trempe. Ceci accroît les possibilités d'utilisation de moteurs ou génératrices à aimants permanents.

### Description des figures et modes de réalisation

D'autres avantages et particularités de l'invention apparaîtront à la lecture de la description détaillée de mises en oeuvre et de modes de réalisation nullement limitatifs, et des dessins annexés suivants :
- la figure 1 illustre une vue en perspective d'un premier mode de réalisation de bobinage selon l'invention, adapté à un moteur ou génératrice électromagnétique à flux axial,
- la figure 2 illustre une vue de détail du bobinage représenté à la figure 1, le bobinage étant formé de trois branches entrelacées, chaque branche comprenant une succession de créneaux avec un sommet, un segment latéral de chaque côté du sommet et une base reliant un créneau avec un créneau adjacent,

- la figure 2a illustre une vue de détail d'un autre mode de réalisation du bobinage représenté à la figure 2, un créneau comportant plusieurs segments latéraux de chaque côté d'un sommet,
- la figure 3 illustre une vue en perspective d'un support pour le bobinage représenté à la figure 1, formant avec ledit bobinage un stator pour un moteur ou génératrice électromagnétique à flux axial,
- la figure 4 illustre une vue en perspective d'un stator comprenant le support représenté à la figure 3 et sur lequel est imbriqué le bobinage représenté à la figure 1,
- la figure 5 illustre une vue en coupe d'un moteur ou génératrice électromagnétique à flux axial comprenant un stator double, chaque stator correspondant au stator tel que représenté à la figure 4,
- la figure 6 illustre une vue d'une moitié d'un rotor du moteur ou génératrice électromagnétique représenté à la figure 5,
- la figure 7 illustre une vue en perspective d'une branche d'un deuxième mode de réalisation de bobinage selon l'invention, adapté à un moteur ou génératrice électromagnétique à flux radial, et
- la figure 8 illustre le principe d'un rotor d'un moteur ou génératrice électromagnétique à flux radial selon l'invention,
- la figure 9 illustre une vue en perspective d'une branche d'un mode de réalisation du bobinage similaire à celui représenté à la figure 2a, un créneau comportant plusieurs segments latéraux de chaque côté d'un sommet,
- la figure 10 illustre une vue en perspective d'une branche d'un mode de réalisation du bobinage similaire à celui représenté à la figure 2.

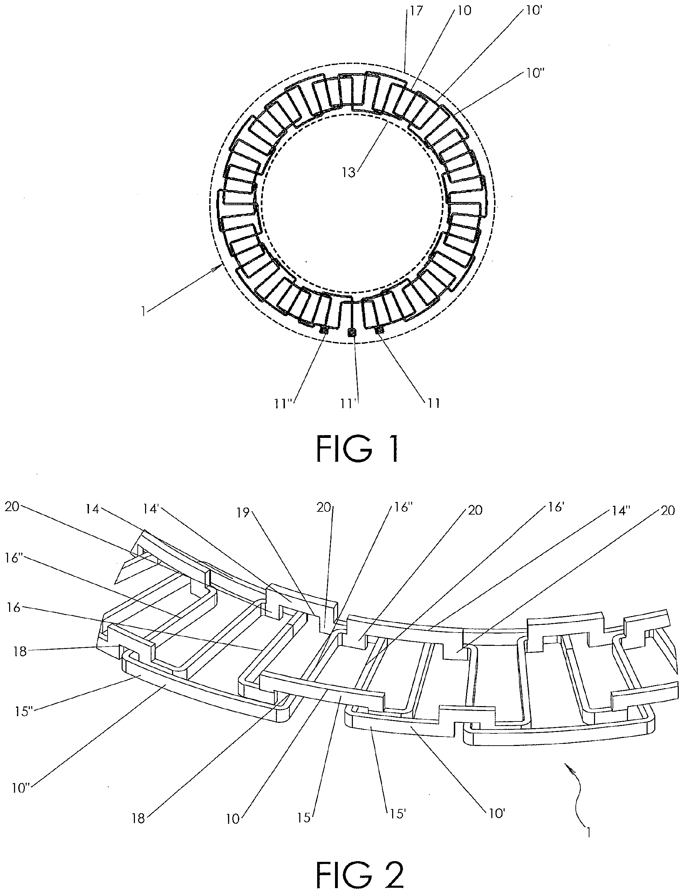

Dans tout ce qui va suivre, un élément qui est au premier plan de la figure considérée sera qualifié d'élément supérieur et inversement pour un élément qui se trouve en arrière-plan. Ceci vaut pour les figures 1, 2a et 4 On va tout d'abord décrire, en référence à la figure 1, un premier mode de réalisation de bobinage 1 selon l'invention. Dans toute la suite et pour de simples raisons de concision, on parlera simplement de moteur ou génératrice électromagnétique et non de moteur ou génératrice électromagnétique à aimants permanents.

Le bobinage 1 comprend trois branches 10, 10' et 10" électriquement conductrices. Chaque branche peut correspondre à une phase d'un courant triphasé. Les trois phases sont reliées entre elles selon un montage dit « en étoile » (un point de contact commun aux trois phases). Chaque branche 10, 10' et 10" présente un connecteur associé 11, 11' respectivement 11 ". Un autre montage est aussi possible.

Toutes les branches 10, 10' et 10" du bobinage 1 sont rigides et fabriquées à partir d'une même ébauche par enlèvement de matière d'au moins un matériau constitutif desdites branches. Cette ébauche peut être avantageusement une ébauche multi-couches qui sont superposées ou contenir des zones faites de différents matériaux.

L'enlèvement de matière peut se faire de diverses manières, notamment par usinage dans la masse, par exemple par commande numérique, dans une ébauche formée d'un bloc massif d'un métal conducteur tel qu'une galette de cuivre ou d'aluminium. Il est aussi possible de procéder à l'électroérosion d'un tel bloc, avantageusement aussi par commande numérique.

Par un seul tenant, il est entendu que le corps de la branche 10, 10' et 10" ne comprend pas uniquement plusieurs parties bobinées les unes sur les autres ou rattachées par des moyens de liaison quelconque. Ce sont toutes les branches 10, 10' et 10" du bobinage qui font partie d'un même corps principal rigide et d'un seul tenant, toutes ses branches provenant d'une même ébauche.

L'ébauche formée d'un bloc massif peut cependant comprendre des couches de matériaux différents liées entre elles, par exemple afin d'obtenir des branches 10, 10' et 10" faites d'un matériau différent ou même de matériaux différents pour une même branche 10, 10' et 10".

On réalise ainsi un bobinage 1 au moins partiellement rigide, où toutes les branches 10, 10' et 10" proviennent d'une même ébauche d'un seul tenant, sans qu'il n'y ait besoin d'aucune soudure, le bobinage 1 présentant un corps massif.

On peut également prévoir de réaliser par usinage dans la masse le bobinage complet comprenant les différentes branches connectées entre elles en un point de contact selon un montage en étoile. On peut également prévoir que les différentes branches ne présentent aucun contact notamment électrique avec une autre branche. On peut également prévoir que les différentes branches sont reliées entre elles selon un montage dit « en triangle ».

Les branches peuvent être imbriquées les unes avec les autres de la façon souhaitée pour le fonctionnement du moteur ou de la génératrice électromagnétique que l'on cherche à réaliser après leurs usinages respectifs. Cependant, on usine en même temps les branches du bobinage dans un même bloc massif.

Le bobinage 1 représenté à la figure 1 est adapté à un moteur ou génératrice électromagnétique à flux axial. Il présente une forme de galette circulaire ouverte en son centre ou couronne. Chaque branche 10, 10' et 10" forme des créneaux. Le nombre de créneaux sur une branche 10, 10' et 10" peut être quelconque.

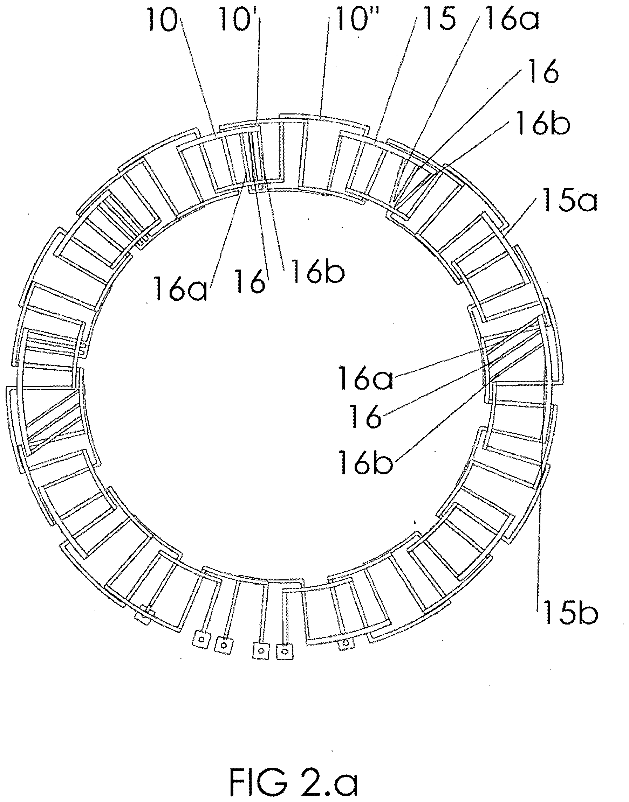

L'ensemble formé par les créneaux d'une branche 10, 10' et 10" définit un corps rigide et d'un seul tenant. A la figure 1, il est représenté des branches 10, 10' et 10" formées chacune d'un tel corps mais dans d'autres modes de réalisation, notamment celui montré à la figure 2a, le corps peut recevoir un ou des éléments latéraux auxiliaires, sous la forme notamment d'un ou de segments latéraux. Ce mode de réalisation sera ultérieurement expliqué en regard de cette figure 2a.

La figure 2 illustre une vue de détail du bobinage représenté à la figure 1. Pour chaque branche respective 10, 10', 10", on différencie la base 14, 14', 14" d'un créneau, le sommet 15, 15', 15" d'un créneau et au moins deux segments latéraux 16, 16', 16". Un segment latéral 16, 16', 16" est donc disposé de chaque côté du sommet 15, 15', 15" en encadrant ledit sommet 15, 15', 15" en formant un angle avec celui-ci, avantageusement un angle droit mais ceci n'est pas limitatif. Deux segments latéraux 16, 16', 16" associés à un même créneau de part et d'autre du sommet 15, 15', 15" sont dits inversés, chacun étant chiral par rapport à l'autre segment associé.

Dans le mode de réalisation montré à la figure 2, pour chaque branche 10, 10', 10", le sommet 15, 15', 15" et les segments latéraux 16, 16', 16" d'une même branche 10, 10', 10" sont compris dans un même plan, ces plans étant superposés. Toujours dans ce mode de réalisation, les segments latéraux 16, 16', 16" sont sensiblement parallèles. Il est cependant à considérer que, pour une même branche 10, 10', 10" les segments latéraux 16, 16', 16" peuvent ne pas être parallèles. La base 14, 14', 14" d'un créneau d'une branche 10, 10', 10" le relie avec le créneau de la même branche 10, 10', 10" qui lui est directement adjacent de ce côté. Les sommets 15, 15', 15" des branches 10, 10', 10" ne sont pas rigoureusement superposés mais décalés sur le pourtour du bobinage dans des plans ou niveaux de différentes hauteurs dans le bobinage. Dans ce qui suit, un élément à un niveau supérieur à un autre élément se trouve dans un plan au-dessus du plan de l'autre élément mais pas forcément directement superposé à cet autre élément. Il en va de même pour le niveau inférieur.

C'est l'ensemble sommet 15 et segments latéraux 16 d'une première branche 10 qui forme la partie supérieure du bobinage 1, les deux autres branches 10', 10" se trouvant alors en dessous de la première branche 10, les créneaux qu'elles forment respectivement étant décalés sur le pourtour du bobinage 1. Les ensembles sommets 15 et segments latéraux 16 associés de la première branche 10 se trouvent donc à un niveau supérieur aux ensembles sommets 15', 15" et segments latéraux 16', 16" des deux autres branches 10', 10".

Les bases 14 des créneaux de la première branche 10 se trouvent à un niveau inférieur par rapport aux bases 14', 14" des deuxièmes et troisièmes branches 10', 10". Dans cette configuration, la seconde branche 10' est la branche intermédiaire en présentant ses ensembles sommets 15' et segments latéraux 16' à un niveau supérieur aux ensembles sommets 15" et segments latéraux 16" de la troisième branche 10".

Dans ce mode de réalisation, il est donc prévu entre l'extrémité des segments latéraux 16, 16' des première et deuxième branches 10, 10' et la base 14, 14' associée un dénivelé 20 porté par les extrémités de la base 14, 14', ce dénivelé permettant de faire passer la branche 10, 10' à un niveau inférieur sur le bobinage 1. Dans une autre forme de réalisation, ce sont les segments latéraux 16, 16' qui sont dirigés vers le bas du bobinage 1 en étant inclinés en conséquence et qui forment le dénivelé pour faire passer la branche 10, 10' à un niveau inférieur sur le bobinage 1.

Chaque segment latéral 16' d'un créneau de la deuxième branche 10' s'étend en traversant un sommet respectif 15 de la première branche 10, ceci par une échancrure 18 pratiquée dans ledit sommet 15 afin de libérer un espace de passage pour ledit segment 16'. Il en va de même pour chaque segment latéral 16" de la branche inférieure 10" passant par une échancrure 18 pratiquée dans un sommet 15' de la deuxième branche 10' ou branche intermédiaire. L'échancrure 18 de la première branche 10 sert aussi au passage d'un segment latéral 16" de la branche inférieure 10", le segment latéral 16" de la troisième branche 10" étant un segment latéral inversé par rapport au segment latéral 16' de la deuxième branche 10'.

La base 14 de chaque créneau de la première branche 10 se trouve à un niveau inférieur aux créneaux de la deuxième branche 10' intermédiaire et de la troisième branche 10" inférieure. Chaque base 14" de la troisième branche 10" comprend aussi une échancrure 19 suffisamment large pour permettre le passage d'un segment latéral 16' de la deuxième branche 10' et d'un segment latéral 16 de la première branche 10. Dans ce cas, le segment latéral 16' de la deuxième branche 10' est un segment latéral inversé par rapport au segment latéral 16 de la première branche 10. Les échancrures 18 et 19 sont formées par enlèvement de matière dans la longueur du sommet 15, 15' ou de la base 14', 14" la portant respectivement, cet enlèvement de matière présentant une profondeur sur une portion de la largeur du sommet 15, 15' ou de la base 14', 14" respective en laissant de la matière sur cette largeur permettant de ne pas former une interruption pour ce sommet 15, 15' ou cette base 14', 14".

Les échancrures 18 et 19 peuvent être par exemple de 2mm.

Il y a donc un entrelacement entre les première, deuxième et troisième branches 10, 10', 10" du bobinage 1. De manière générale, le bobinage 1 peut comprendre n branches 10, 10', 10" rigides et d'un seul tenant et pas seulement trois branches comme montré à la figure 2.

Avec x compris entre 1 et n tout en étant supérieur à 1 et inférieur à n, la xiéme branche 10', 10" présente son sommet 15', 15" à un niveau supérieur à celui du sommet de la x+1ième branche et à un niveau inférieur à celui du sommet de la x-1ième branche, la base 14', 14" de la xième branche étant à un niveau supérieur à celui du niveau de la base de la x-1ième branche et à un niveau inférieur à celui de la base de la x+1ième branche.

Par exemple, la première branche 10 présente son sommet 15 à un niveau supérieur à celui des sommets 15', 15" des n-1 branches restantes 10', 10" et sa base 14 à un niveau inférieur à celui des bases 14', 14" des n-1 branches restantes. La nième branche 10" présente son sommet 15" à un niveau inférieur à celui des sommets 15, 15' des n-1 branches restantes 10, 10' et sa base 14" à un niveau supérieur à celui des bases 14, 14' des n-1 branches restantes, n étant à la figure 2 égal à 3.

Il est aussi possible d'utiliser d'autres formes d'entrelacement pour les branches 10, 10', 10" du bobinage 1, pourvu que chaque branche 10, 10', 10" présente des parties à un niveau supérieur aux autres branches 10, 10', 10" et des parties à un niveau inférieur aux autres branches 10, 10', 10", ce qui permet un équilibrage du champ magnétique.

Comme montré à la figure 1, le bobinage 1 est inscrit dans une couronne externe 17 représenté en pointillés à la figure 1. Les sommets 15, 15', 15" des créneaux dessinent cette couronne externe 17. Une couronne interne 13 est inscrite à l'intérieur du bobinage 1. Les bases 14, 14', 14" des créneaux dessinent cette couronne interne 13.

Les segments latéraux 16, 16', 16" des créneaux d'une même branche 10, 10', 10" sont avantageusement coplanaires. Les segments latéraux 16, 16', 16" sont répartis périodiquement les uns à la suite des autres. Une période comprend à la suite un segment latéral 16, 16', 16" de chacune des trois branches 10, 10' et 10". L'intervalle entre deux segments latéraux 16, 16', 16" est constant. Chaque segment latéral 16, 16', 16"d'une branche 10, 10' ou 10" est compris entre un segment latéral de chacune des deux autres branches.

La figure 2a illustre un mode de réalisation du bobinage où au moins une branche 10, 10' et 10" du bobinage présente au moins un créneau avec au moins un segment latéral auxiliaire 16a, 16b, 16c raccordé à la même extrémité d'un sommet 15 qu'un segment latéral 16 faisant partie du corps de la branche 10.

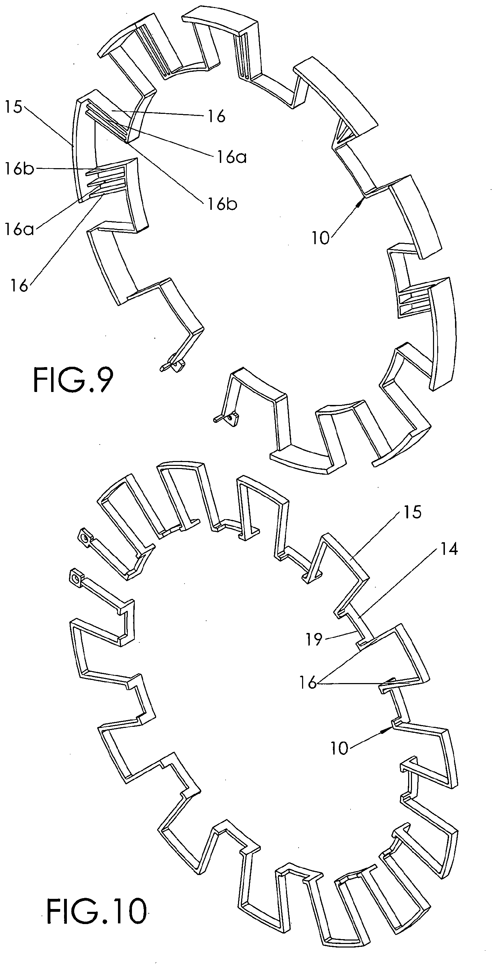

Un mode de réalisation similaire à celui montré à cette figure 2a peut aussi être vu à la figure 9 qui montre une unique branche 10 de bobinage présentant plusieurs segments latéraux auxiliaires 16a, 16b, 16c en plus du segment latéral 16 sur un même côté d'un sommet 15 tandis que la figure 10 montre, à titre de comparaison, une unique branche 10 d'un bobinage avec un seul segment latéral 16 sur un côté du sommet 15.

En se référant aux figures 2a et 9 prises en combinaison, il est montré des segments latéraux auxiliaires 16a, 16b, 16c pour la première branche 10 dite branche supérieure et pour la deuxième branche 10' dite branche intermédiaire, seuls les segments latéraux auxiliaires 16a, 16b, 16c de la première branche 10 étant représentés référencés pour plus de clarté à ces figures et ne pas les surcharger inutilement.

Ces segments latéraux auxiliaires 16a, 16b, 16c qui servent principalement à réduire les pertes par effet joule dans le bobinage peuvent cependant être adaptés sur les n branches 10, 10' et 10" du bobinage. Ces segments latéraux auxiliaires 16a, 16b, 16c sont avantageusement de petite section, cette section pouvant être quelconque, notamment mais pas uniquement carrée, rectangulaire ou circulaire.

Tous les créneaux d'au moins une branche 10, 10' et 10" peuvent être équipés de segmentes latéraux auxiliaires 16a, 16b, 16c ou un seul des créneaux d'une branche 10, 10' et 10". Il peut exister aussi des bobinages avec un ou des segments latéraux auxiliaires 16a, 16b, 16c pour une branche 10, 10' et 10" et aucun segment latéral auxiliaire 16a, 16b, 16c pour une autre branche 10, 10' et 10".

Plusieurs modes de réalisation de ces segments latéraux auxiliaires 16a, 16b, 16c sont possibles. Par exemple, ledit au moins un segment latéral auxiliaire 16a, 16b, 16c peut être rigide et d'un même tenant avec le corps de la branche 10 le portant. Dans ce cas, ledit au moins un segment auxiliaire 16a, 16b, 16c est avantageusement obtenu lors du procédé de fabrication de la branche à partir d'une ébauche en faisant partie du corps de la branche rigide et d'un seul tenant.

Dans une alternative, ledit au moins un segment latéral auxiliaire 16a, 16b, 16c peut être raccordé par un moyen de liaison avec son sommet associé 15. Ce moyen de liaison peut être une soudure, une colle magnétique ou un moyen mécanique quelconque conducteur du courant.

Pour ces deux alternatives, les segments latéraux 16, 16a, 16b, 16c, c'est-à-dire les segments latéraux auxiliaires et le segment 16, associés à une même extrémité d'un sommet 15, 15a d'un créneau d'une branche 10 du bobinage présentent une ou plusieurs des caractéristiques suivantes : des sections différentes, des orientations différentes ou des matériaux différents.

A la figure 2a, un sommet 15 ou 15b est montré associé sur un côté avec trois segments latéraux 16, 16a, 16b dont deux segments latéraux auxiliaires 16a, 16b. De ce côté du sommet 15, les trois segments latéraux 16, 16a, 16b sont inclinés l'un vers l'autre pour se rejoindre vers la base du créneau. Par contre, pour le sommet 15b, les segments latéraux 16, 16a, 16b d'un même côté du sommet 15b sont parallèles entre eux. Un autre sommet 15a ne présente qu'un segment latéral sur chacun de ses côtés.

Tout ceci n'est aucunement limitatif. Par exemple, un créneau d'une branche 10, 10' et 10" n'a pas forcément un nombre ou une inclinaison des segments latéraux 16, 16a, 16b différents sur chacun de ses côtés. Le nombre des segments latéraux 16, 16a, 16b pour un créneau peut aussi être quelconque et n'est pas limité à trois ou à quatre.

Avantageusement mais non limitativement, un des segments latéraux 16, 16a, 16b peut être d'un matériau différent des autres segments latéraux 16, 16a, 16b, associés ou du matériau du sommet 15, 15a ou 15b. Par exemple, ce segment latéral peut être un segment latéral auxiliaire ajouté par un moyen de liaison après fabrication de la branche 10, 10' et 10".

Cependant, il est aussi possible que ce segment latéral soit un segment latéral directement obtenu lors de la fabrication de la branche 10, 10' et 10" en faisant partie du corps de la branche 10, 10' et 10". Dans ce cas, l'ébauche en tant que pièce massive pour l'obtention d'au moins une branche 10, 10' et 10" avantageusement pour l'obtention des n branches 10, 10' et 10" du bobinage fabriquées ensemble, comprend des parties de matériaux différents.

Les matériaux pouvant être employés sont des matériaux bon conducteurs, avantageusement de l'aluminium, du cuivre, de l'étain, de l'argent etc.

Si la pièce massive pour l'obtention d'au moins une branche 10, 10' et 10" ou du bobinage complet subit un enlèvement de matière, il a été prédéfini les zones de cette pièce massive devant correspondre à un ou des segments latéraux de matériaux différents, ces zones étant des zones constituées dudit matériau différent du matériau de base de la pièce.

Si la branche 10, 10' et 10" ou le bobinage complet est fabriqué par moulage, il est procédé à des coulées successives des différents matériaux de base de la branche 10, 10', 10" et du bobinage et de celui du ou des segments latéraux 16, 16a, 16b en matériaux différents. Accessoirement, la figure 2a présente un bobinage avec six pôles tandis qu'à la figure 2 il n'y avait que trois pôles, ceci étant dû à la différence de connexion électrique qui n'est pas en étoile à cette figure.

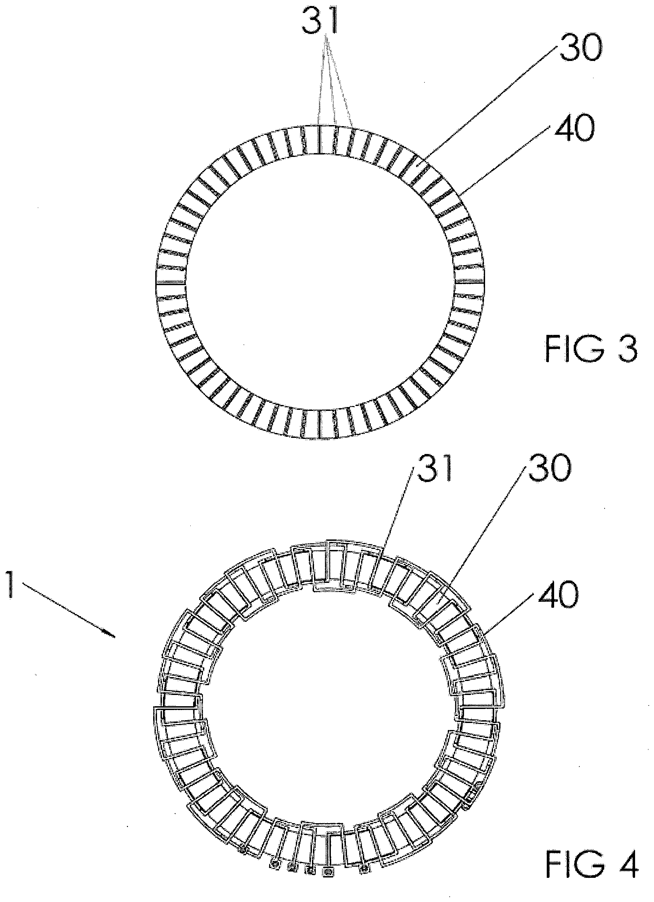

La figure 3 illustre une vue en perspective d'un support 30 pour le bobinage représenté à la figure 1, formant avec ledit bobinage un stator 40 pour un moteur ou génératrice électromagnétique à flux axial. Le support 30 présente une forme de galette massique ouverte en son centre et pourvue d'encoches radiales 31 (c'est-à-dire orientées chacune selon un rayon du support 30 de forme circulaire) s'enfonçant sur une partie de son épaisseur. On peut également parler de tore pour désigner le support 30. Quand il y a plusieurs segments latéraux, il peut y avoir autant d'encoches que de segments latéraux.

Le support 30 est formé de tôles magnétiques (par exemple en fer, nickel ou acier) enroulées les unes sur les autres, qui peuvent être de natures et d'épaisseurs différentes. Il s'agit de préférence de tôles magnétiques à grains non orientés. On peut parler de matériau feuilleté. Les tôles sont avantageusement enroulées à plat autour de l'axe de symétrie circulaire du support 30.

La figure 4 illustre une vue en perspective d'un stator 40 comprenant le support 30 représenté à la figure 3 et sur lequel est imbriqué le bobinage 1 qui est partiellement reçu dans des encoches 31. Seules les parties de bobinage passant dans les encoches 31, visibles aux figures 3 et 4, sont magnétiquement actives, ces parties étant avantageusement les segments latéraux des créneaux. La forme des tronçons de bobinage circonférentiels (bases et sommets des créneaux) importe peu.

L'ensemble peut être ensuite noyé dans tout liant isolant, par exemple une résine, pour assurer une bonne isolation électrique de celui-ci. En outre, on améliore également la stabilité mécanique du support 30 relativement au bobinage. Le passage du courant dans le bobinage traversant le support 30 crée un champ magnétique induit.

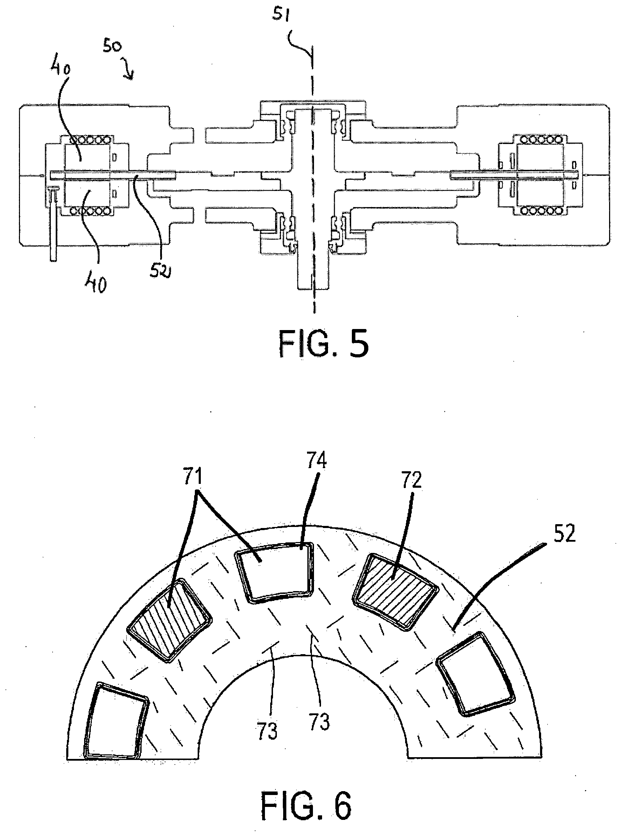

La figure 5 illustre une vue en coupe d'un exemple de moteur ou génératrice électromagnétique 50 à flux axial comprenant un stator double, chaque stator 40 correspondant au stator tel que représenté à la figure 4. On peut parler de moteur à double entrefer. Le moteur 50 est prévu pour tourner autour d'un axe de rotation 51.

Le moteur ou génératrice électromagnétique 50 à flux axial représenté à la figure 5 comprend un unique rotor 52 placé entre deux stators 40. Chaque stator 40 présente au rotor 52 sa face pourvue des encoches montrées à la figure 4 sous la référence 31 dans lesquelles passe le bobinage selon l'invention.

On peut prévoir que, pour une phase donnée, les branches correspondant à cette phase des deux stators 40 soient branchées en série, ou en parallèle. On peut relier ensemble les branches des bobinages respectifs des deux stators 40 qui correspondent à une même phase. On pourrait également prévoir que, dès l'usinage, on usine ensemble les bobinages des deux stators 40.

Le rotor 52 comprend des aimants permanents à flux axial, répartis alternativement dans un sens et dans l'autre sur le rotor, ceci face au bobinage. De chaque côté du rotor 52, les pôles nord et sud des aimants se succèdent. En faisant varier le courant électrique parcourant le bobinage, on peut alors mettre le rotor 52 en rotation.

Les aimants présentent une forme d'arc de cercle épais. On dit qu'ils sont à flux axial car leur champ magnétique est orthogonal au plan de l'arc de cercle. Le centre de l'arc de cercle passe par l'axe de rotation du moteur ou de la génératrice. Les aimants permanents sont insérés dans des trous traversant une matrice composite formant avec les aimants le rotor 52. Chaque aimant présente donc son pôle nord à l'un des stators 40 et son pôle sud à l'autre stator. Chaque aimant est fixé par frettage dans un trou traversant associé.

Selon un exemple de réalisation, les quatre coins de l'aimant sont en contact direct avec les bords du trou traversant. De la colle placée autour de ces quatre coins améliore la tenue mécanique de l'aimant dans le trou traversant. Le rotor 52 peut ne pas comporter de matériau conducteur d'électricité, en particulier pas de fer. La matrice composite recevant les aimants permanents peut comprendre à la place de la fibre de verre. Dans un mode de réalisation dérivant de la figure 5, il est aussi possible de disposer consécutivement sur l'axe de rotation 51 plusieurs ensembles de rotor 52 et de stator 40, avantageusement arrangés sous la forme d'une paire comme montré à la figure 5.

La figure 6 illustre une vue de face d'une moitié du rotor 52, c'est-à-dire dans un plan orthogonal à l'axe de rotation 51, cet axe étant montré à la figure 5. On peut voir des aimants permanents 71 présentant alternativement au stator un pôle magnétique nord (représenté hachuré) et un pôle magnétique sud (représenté non hachuré). Chaque aimant est logé dans un trou traversant creusé dans une matrice composite présentant des fibres de verre 73. Les fibres présentent différentes orientations dans l'espace. Chaque aimant 71 est fixé par frettage dans la matrice composite. La frette (pièce extérieure, par opposition à la pièce intérieure dite frettée) est formée par un enroulement d'un drapage 74 de matériau composite à base de fibres de verre.

On peut parler de moteur plat, puisqu'il est formé de disques (ou couronnes) superposés : un rotor entre deux stators. Les faces d'entrefer sont situées à plat sur des disques et non sur une face latérale d'un cylindre. Un avantage de cette disposition est que l'on réalise un moteur à double entrefer mais à rotor unique. Il n'y a qu'un rotor à accoupler, ce qui simplifie le couplage. Il s'agit d'un moteur ou génératrice synchrone, c'est-à-dire consommant ou produisant un courant électrique dont la fréquence détermine la vitesse de rotation du rotor.

Une application toute particulière mais non limitative du moteur ou de la génératrice selon la présente invention se situe dans des gammes de pression ou de température se trouvant en dessous ou en dessus de la pression ou de la température ambiante.

Par exemple, dans le cas d'un fonctionnement à pression élevée, c'est-à-dire supérieure à 10 bars, un moteur selon la présente invention peut par exemple présenter les caractéristiques suivantes :
- rendement énergétique de 95% à 99%
- cos ϕ égal à l'unité (l'angle ϕ est appelé "facteur de puissance". Le facteur de puissance est le décalage temporel (on dit "déphasage") entre la tension et le courant.)
- poids total (rotor, stators, bobinages, carcasse) : 150 à 500 kg
- masse tournante : 10 à 22 kg
- courant électrique maximum dans le bobinage : 400 à 500 Ampères
- tension électrique d'alimentation maximale : 400 à 600 Volts
- puissance fournie 200 kW à 350 kW
- alimentation triphasée
- épaisseur : 130 à 250 mm
- diamètre 700 à 900 mm.

Une application toute particulière d'un tel moteur synchrone est de permettre d'entraîner un élément de brassage dans un four industriel, sous forme par exemple d'un ventilateur ou d'une turbine.

Dans une utilisation particulièrement avantageuse, ce moteur peut être utilisé dans une cellule de trempe d'au moins une pièce à traiter, notamment à basse cémentation, le moteur pouvant être soumis à une pression allant de 5 à 30 bars et à une température comprise entre 20°C et 150°C. Le moteur peut ainsi se trouver à l'extérieur de la cellule tout en étant en surpression par rapport à la cellule de trempe. Dans une telle cellule de trempe, notamment sous gaz, l'élément de brassage entraîné par le moteur initie un écoulement de gaz entre la pièce traitée et un échangeur placé dans ladite cellule.

Ceci permet l'utilisation d'un moteur synchrone associée à une cellule de trempe alors que dans l'art antérieur, seuls des moteurs asynchrones étaient utilisés, un des inconvénients de ces moteurs asynchrones étant qu'ils sont plus encombrants et donc plus lourds, avec, en outre, un démarrage plus difficile, des vitesses de rotation moins élevées, des rendements plus faibles.

Pour ordre d'idée, ces moteurs asynchrones pouvaient présenter les caractéristiques suivantes :
- rendement énergétique de 60%
- cos ϕ égal inférieur à 0,5
- poids total : au moins 1200 kg
- masse tournante : au moins 500 kg
- dimensions : 1 mètre sur 0,8 mètre, plus un bornier
- puissance fournie 200 kW.

D'une manière générale une utilisation d'un moteur ou d'une génératrice selon la présente invention, peut s'effectuer en association avec une enceinte fermée, le moteur ou la génératrice étant placé à l'intérieur ou à l'extérieur de ladite enceinte, le moteur ou la génératrice étant sous vide ou à pression supérieure à 2 bars ou à une température inférieure à 0°C ou supérieure à 60°C.

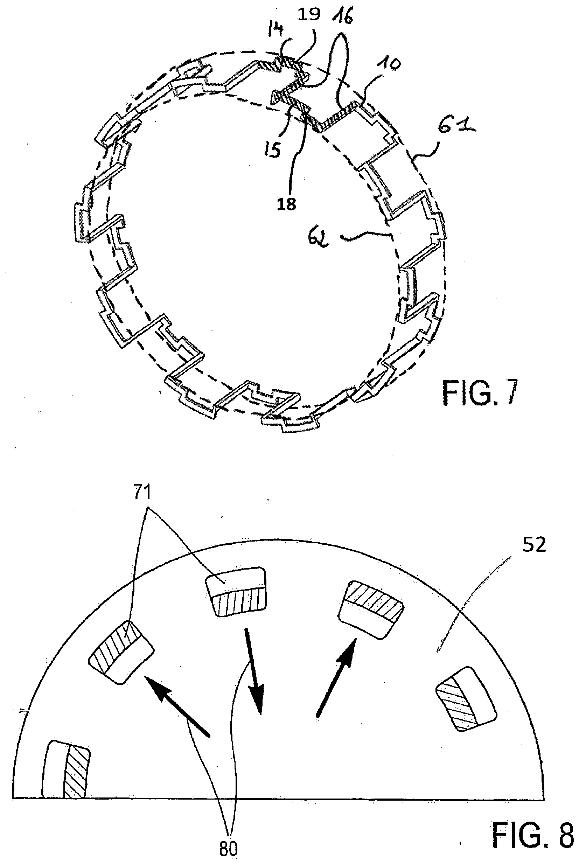

La figure 7 illustre une vue en perspective d'une branche d'un deuxième mode de réalisation de bobinage selon l'invention, adapté à un moteur ou génératrice électromagnétique à flux radial. La figure 7 illustre effectivement une seule branche 10 d'un tel bobinage, cette branche comprenant une suite de créneaux comportant chacun un sommet 15, une base 14, les deux extrémités respectives du sommet 15 et de la base 14 étant reliées par un segment latéral 16.

Il faut imaginer, dans le cas d'une alimentation triphasée, trois branches du même type. Une telle branche peut aussi recevoir un ou des segments latéraux des deux côtés d'un sommet d'un créneau, notamment comme il a été illustré à la figure 2a. Les mêmes considérations énoncées en regard de la figure 2 pour le bobinage peuvent aussi s'appliquer à ce mode de réalisation.

Un moteur ou génératrice électromagnétique à flux radial est par exemple sensiblement similaire au moteur ou à la génératrice électromagnétique à flux axial décrit ci-dessus. Les aimants permanents sur le rotor sont sous forme d'arc de cercle épais. On dit qu'ils sont à flux radial car leur champ magnétique converge vers le centre de l'arc de cercle. Le bobinage peut présenter une forme de cylindre.

La branche 10 est formée d'une bandelette dessinant des créneaux. Un créneau est représenté hachuré à la figure 7. Les bases 14 des créneaux dessinent un cercle 61 formant la base du cylindre, et les sommets 15 des créneaux dessinent un cercle 62 formant le sommet du cylindre.

Les segments latéraux 16 des créneaux sont parallèles entre eux et situés sur la face latérale du cylindre. Ils peuvent avantageusement former la partie magnétiquement active du bobinage, en étant imbriqués dans des encoches correspondantes d'un stator.

La figure 8 illustre le principe d'un rotor d'un tel moteur ou génératrice électromagnétique à flux radial. Les flèches 80 illustrent la direction du champ magnétique créé par les aimants permanents 71.

Bien sûr, l'invention n'est pas limitée aux exemples qui viennent d'être décrits et de nombreux aménagements peuvent être apportés à ces exemples sans sortir du cadre de l'invention. En particulier toutes les caractéristiques, formes, variantes et modes de réalisation décrits précédemment peuvent être combinés entre eux selon diverses combinaisons dans la mesure où ils ne sont pas incompatibles ou exclusifs les uns des autres. On pourra également prévoir toute combinaison d'un ou plusieurs rotors et un ou plusieurs stators. Par exemple, on pourrait prévoir deux rotors à aimant permanents chacun en forme d'anneaux et encadrant un stator également en forme d'anneau et pourvu d'un bobinage selon l'invention.

## Revendications

1. Procédé de fabrication d'un bobinage (1) pour un élément stator d'un moteur ou génératrice électromagnétique à aimants permanents, le bobinage comprenant au moins deux branches (10, 10', 10") conductrices correspondant chacune à une phase d'un courant électrique, lesdites au moins deux branches (10, 10', 10") étant rigides et fabriquées à partir d'une même ébauche d'au moins un matériau par enlèvement de matière (10, 10', 10"), **caractérisé en ce que** l'enlèvement de matière se fait de sorte à réaliser des créneaux sur les branches avec des sommets et des segments latéraux des créneaux d'une même branche (10, 10', 10") compris dans un même plan, les plans des branches (10, 10', 10") ainsi définis étant superposés, une première branche (10) présentant les sommets (15, 15a) de ses créneaux à un niveau supérieur au plan comprenant les sommets (15', 15") des créneaux d'une deuxième branche (10', 10") avec un décalage sur un pourtour du bobinage entre les créneaux d'une branche (10) par rapport à l'autre (10', 10"), la première branche (10) présentant les bases (14) de ses créneaux à un niveau inférieur sur le bobinage (1) à celui des bases (14', 14") des créneaux de la deuxième branche (10', 10"), l'ensemble des créneaux formant le corps de la branche (10, 10', 10").

2. Procédé de fabrication selon la revendication précédente, lequel se fait par usinage ou électroérosion par commande numérique.

3. Bobinage (1) comprenant au moins deux branches (10, 10', 10") conductrices entrelacées correspondant chacune à une phase d'un courant électrique, chacune des branches (10, 10', 10") étant rigide et d'un seul tenant, le bobinage étant obtenu conformément au procédé selon l'une quelconque des deux revendications précédentes, chacune des branches (10, 10', 10") étant formée de créneaux, chaque créneau comprenant un sommet (15, 15a, 15b, 15', 15") encadré par au moins un segment latéral (16, 16a, 16b, 16', 16") à chacune de ses extrémités et une base (14, 14', 14") raccordant le créneau à un créneau adjacent de la branche (10, 10', 10"), chaque segment latéral (16, 16a, 16b, 16', 16") raccordant une partie d'extrémité du sommet (15, 15a, 15b, 15', 15") à une partie d'extrémité de la base (14, 14', 14"), un décalage sur un pourtour du bobinage existant entre les créneaux d'une branche (10) par rapport à l'autre (10', 10"), **caractérisé en ce que** les sommets et les segments latéraux d'une même branche (10, 10', 10") sont compris dans un même plan, les plans des branches (10, 10', 10") ainsi définis étant superposés, une première branche (10) présentant les sommets (15, 15a) de ses créneaux à un niveau supérieur au plan comprenant les sommets (15', 15") des créneaux d'une deuxième branche (10', 10"), la première branche (10) présentant les bases (14) de ses créneaux à un niveau inférieur sur le bobinage (1) à celui des bases (14', 14") des créneaux de la deuxième branche (10', 10"), l'ensemble des créneaux formant le corps de la branche (10, 10', 10").

4. Bobinage (1) selon la revendication 3, **caractérisé en ce qu'**il comprend n branches (10, 10', 10") rigides et d'un seul tenant, avec pour x supérieur à 1 et inférieur à n, la xiéme branche (10, 10', 10") présentant ses sommets (15, 15a, 15b, 15', 15") à un niveau supérieur à celui des sommets (15, 15a, 15b, 15', 15") de la x+1ième branche (10, 10', 10") et à un niveau inférieur à celui des sommets (15, 15a, 15b, 15', 15") de la x-1ième branche (10, 10', 10"), les bases (14, 14', 14") de la xième branche (10, 10', 10") étant à un niveau supérieur à celui des bases (14, 14', 14") de la x-1ième branche (10, 10', 10") et à un niveau inférieur à celui des bases (14, 14', 14") de la x+1ième branche (10, 10', 10").

5. Bobinage (1) selon la revendication 3 ou 4, **caractérisé en ce que** chaque sommet d'une branche supérieure ou chaque base d'une branche inférieure présente une échancrure (18, 19) pour le passage d'un segment latéral d'un créneau d'une branche inférieure ou respectivement d'un segment latéral d'un créneau d'une branche supérieure.

6. Bobinage (1) selon l'une quelconque des revendications 3 à 5, **caractérisé en ce que** les segments latéraux (16, 16a, 16b, 16', 16") des créneaux des branches (10, 10', 10") sont inclinés dans le sens de la hauteur du bobinage (1) vers la base (14, 14', 14") associée des créneaux.

7. Bobinage (1) selon l'une quelconque des revendications 3 à 5, **caractérisé en ce que** les segments latéraux (16, 16a, 16b, 16', 16") des créneaux des branches (10, 10', 10") sont disposés dans le même plan que le sommet (15, 15a, 15b, 15', 15") associé des créneaux, un dénivelé (20) étant prévu sur chaque extrémité de la base (14, 14', 14") pour sa liaison avec l'extrémité en regard du segment latéral (16, 16a, 16b, 16', 16") associé.

8. Bobinage (1) selon l'une quelconque des revendications 3 à 7, **caractérisé en ce qu'**au moins pour un créneau, il est prévu au moins un segment latéral auxiliaire (16a, 16b, 16c) raccordé à la même extrémité d'un sommet (15, 15a) qu'un segment latéral (16, 16', 16") faisant partie du corps de la branche (10, 10', 10").

9. Bobinage (1) selon la revendication 8, **caractérisé en ce que** ledit au moins un segment latéral auxiliaire (16a, 16b, 16c) est rigide et d'un même tenant avec le corps de la branche (10, 10', 10") le portant.

10. Bobinage (1) selon la revendication 8, **caractérisé en ce que** ledit au moins un segment latéral auxiliaire (16a, 16b, 16c) est raccordé par un moyen de solidarisation avec son sommet (15, 15a) associé.

11. Bobinage (1) selon l'une quelconque des trois revendications précédentes, **caractérisé en ce que** les segments latéraux (16, 16a, 16b, 16c) associés à une même extrémité présentent une ou plusieurs des caractéristiques suivantes: des sections différentes, des orientations différentes ou des matériaux différents.

12. Moteur ou génératrice électromagnétique à aimants permanents (50) comprenant au moins un rotor (52) et au moins un stator (40), **caractérisé en ce qu'**il comprend au moins un bobinage (1) selon l'une quelconque des revendications 3 à 11, le moteur étant soit un moteur ou génératrice électromagnétique à flux axial (50), ledit au moins un bobinage (1) présentant une forme de cylindre ou soit un moteur ou génératrice électromagnétique à flux radial, ledit au moins un bobinage (1) présentant une forme de couronne.

13. Moteur (50) selon la revendication 12, **caractérisé en ce que** son ou ses stators (40) comprennent un anneau plat (30) pourvu d'encoches (31) situées dans le plan de l'anneau (30) faisant face au rotor (52) associé, au moins un bobinage (1) étant imbriqué dans ces encoches (31).

14. Moteur (50) selon la revendication 12, **caractérisé en ce que** ledit au moins un bobinage (1) est moulé dans un liant isolant et logé dans le ou les stators (40) et **en ce que** le ou les rotors (52) sont à aimants permanents et réalisés en fibre de verre.

15. Utilisation d'un moteur ou génératrice selon l'une quelconque des revendications 12 à 14, **caractérisée en ce qu'**elle s'effectue en association avec une enceinte fermée, le moteur ou la génératrice étant placé à l'intérieur ou à l'extérieur de ladite enceinte, le moteur ou la génératrice étant sous vide ou à pression supérieure à 2 bars ou à une température inférieure à 0°C ou supérieure à 60°C.

## Patentansprüche

1. Verfahren zur Herstellung einer Spule (1) für ein Statorelement eines elektromagnetischen Motors oder Generators mit Dauermagneten, wobei die Spule wenigstens zwei leitende Schenkel (10, 10', 10") umfasst, die jeder einer Phase eines elektrischen Stroms entsprechen, wobei die wenigstens zwei Schenkel (10, 10', 10") starr und aus ein und demselben Rohling aus wenigstens einem Werkstoff durch Abtragen von Material (10, 10', 10") hergestellt sind, **dadurch gekennzeichnet, dass** das Abtragen von Material derart erfolgt, dass Zinnen auf den Schenkeln ausgeführt werden, wobei Oberseiten und Seitensegmente der Zinnen ein und desselben Schenkels (10, 10', 10") in ein und derselben Ebene liegen, wobei die so definierten Ebenen der Schenkel (10, 10', 10") übereinander liegen, wobei ein erster Schenkel (10) die Oberseiten (15, 15a) seiner Zinnen auf einem Niveau oberhalb der Ebene aufweist, die die Oberseiten (15', 15") der Zinnen eines zweiten Schenkels (10', 10") umfasst, mit einem Versatz auf einem Umfang der Spule zwischen den Zinnen eines Schenkels (10) in Bezug auf den anderen (10', 10"), wobei der erste Schenkel (10) die Grundseiten (14) seiner Zinnen auf einem Niveau unterhalb auf der Spule (1) aufweist als jenem der Grundseiten (14', 14") der Zinnen des zweiten Schenkels (10', 10"), wobei die Gesamtheit der Zinnen den Körper des Schenkels (10, 10', 10") bildet.

2. Herstellungsverfahren nach dem vorhergehenden Anspruch, das durch Bearbeitung oder Elektroerosion durch digitale Steuerung erfolgt.

3. Spule (1), die wenigstens zwei verschachtelte leitende Schenkel (10, 10', 10") umfasst, die jeder einer Phase eines elektrischen Stroms entsprechen, wobei jeder der Schenkel (10, 10', 10") starr und einstückig ist, wobei die Spule gemäß dem Verfahren nach einem der zwei vorhergehenden Ansprüche erhalten wird, wobei jeder der Schenkel (10, 10', 10") aus Zinnen gebildet ist, wobei jede Zinne eine Oberseite (15, 15a, 15b, 15', 15") umfasst, die an jedem ihrer Enden von wenigstens einem Seitensegment (16, 16a, 16b, 16', 16") flankiert ist, und eine Grundseite (14, 14', 14"), die die Zinne mit einer benachbarten Zinne des Schenkels (10, 10', 10") verbindet, wobei jedes Seitensegment (16, 16a, 16b, 16', 16") einen Endabschnitt der Oberseite (15, 15a, 15b, 15', 15") mit einem Endabschnitt der Grundseite (14, 14', 14") verbindet, wobei ein Versatz auf einem Umfang der Spule zwischen den Zinnen eines Schenkels (10) in Bezug auf den anderen (10', 10") besteht, **dadurch gekennzeichnet, dass** die Oberseiten und die Seitensegmente ein und desselben Schenkels (10, 10', 10") in ein und derselben Ebene liegen, wobei die so definierten Ebenen der Schenkel (10, 10', 10") übereinander liegen, wobei ein erster Schenkel (10) die Oberseiten (15, 15a) seiner Zinnen auf einem Niveau oberhalb der Ebene aufweist, die die Oberseiten (15', 15") der Zinnen eines zweiten Schenkels (10', 10") umfasst, wobei der erste Schenkel (10) die Grundseiten (14) seiner Zinnen auf einem Niveau unterhalb auf der Spule (1) aufweist als jenem der Grundseiten (14', 14") der Zinnen des zweiten Schenkels (10', 10"), wobei die Gesamtheit der Zinnen den Körper des Schenkels (10, 10', 10") bildet.

4. Spule (1) nach Anspruch 3, **dadurch gekennzeichnet, dass** sie n starre und einstückige Schenkel (10, 10', 10") umfasst, wobei x größer als 1 und kleiner als n ist, wobei der x-te Schenkel (10, 10', 10") seine Oberseiten (15, 15a, 15b, 15', 15") auf einem Niveau oberhalb jenem der Oberseiten (15, 15a, 15b, 15', 15") des x+1-ten Schenkels (10, 10', 10") und auf einem Niveau unterhalb jenem der Oberseiten (15, 15a, 15b, 15', 15") des x-1-ten Schenkels (10, 10', 10") aufweist, wobei die Grundseiten (14, 14', 14") des x-ten Schenkels (10, 10', 10") auf einem Niveau oberhalb jenem der Grundseiten (14, 14', 14") des x-1-ten Schenkels (10, 10', 10") und auf einem Niveau unterhalb jenem der Grundseiten (14, 14', 14") des x+1-ten Schenkels (10, 10', 10") liegen.

5. Spule (1) nach Anspruch 3 oder 4, **dadurch gekennzeichnet, dass** jede Oberseite eines oberen Schenkels oder jede Grundseite eines unteren Schenkels eine Aussparung (18, 19) für den Durchtritt eines Seitensegments einer Zinne eines unteren Schenkels oder beziehungsweise eines Seitensegments einer Zinne eines oberen Schenkels aufweist.

6. Spule (1) nach einem der Ansprüche 3 bis 5, **dadurch gekennzeichnet, dass** die Seitensegmente (16, 16a, 16b, 16', 16") der Zinnen der Schenkel (10, 10', 10") in Höhenrichtung der Spule (1) zur zugehörigen Grundseite (14, 14', 14") der Zinnen hin geneigt ist.

7. Spule (1) nach einem der Ansprüche 3 bis 5, **dadurch gekennzeichnet, dass** die Seitensegmente (16, 16a, 16b, 16', 16") der Zinnen der Schenkel (10, 10', 10") in ein und derselben Ebene angeordnet sind wie die zugehörige Oberseite (15, 15a, 15b, 15', 15") der Zinnen, wobei an jedem Ende der Grundseite (14, 14', 14") ein Höhenversatz (20) vorgesehen ist für seine Verbindung mit dem Ende, das dem zugehörigen Seitensegment (16, 16a, 16b, 16', 16") gegenüberliegt.

8. Spule (1) nach einem der Ansprüche 3 bis 7, **dadurch gekennzeichnet, dass** wenigstens für eine Zinne wenigstens ein zusätzliches Seitensegment (16a, 16b, 16c) vorgesehen ist, das mit ein und demselben Ende einer Oberseite (15, 15a) verbunden ist wie ein Seitensegment (16, 16', 16"), das Teil des Körpers des Schenkels (10, 10', 10") ist.

9. Spule (1) nach Anspruch 8, **dadurch gekennzeichnet, dass** das wenigstens eine zusätzliche Seitensegment (16a, 16b, 16c) starr und mit dem Körper des Schenkels (10, 10', 10,"), der ihn trägt, einstückig ist.

10. Spule (1) nach Anspruch 8, **dadurch gekennzeichnet, dass** das wenigstens eine zusätzliche Seitensegment (16a, 16b, 16c) durch ein Befestigungsmittel mit seiner zugehörigen Oberseite (15, 15a) verbunden ist.

11. Spule (1) nach einem der drei vorhergehenden Ansprüche, **dadurch gekennzeichnet, dass** die ein und demselben Ende zugehörigen Seitensegmente (16, 16a, 16b, 16c) eine oder mehrere der folgenden Merkmale aufweisen: unterschiedliche Querschnitte, unterschiedliche Ausrichtungen oder unterschiedliche Werkstoffe.

12. Elektromagnetischer Motor oder Generator mit Dauermagneten (50), der wenigstens einen Rotor (52) und wenigstens einen Stator (40) umfasst, **dadurch gekennzeichnet, dass** er wenigstens eine Spule (1) nach einem der Ansprüche 3 bis 11 umfasst, wobei der Motor entweder ein elektromagnetischer Axialflussmotor oder - generator (50) ist, wobei die wenigstens eine Spule (1) eine Zylinderform aufweist, oder ein elektromagnetischer Radialflussmotor oder -generator ist, wobei die wenigstens eine Spule (1) eine Kranzform aufweist.

13. Motor (50) nach Anspruch 12, **dadurch gekennzeichnet, dass** sein oder seine Statoren (40) einen flachen Ring (30) umfassen, der mit Einkerbungen (31) versehen ist, die in der Ebene des Rings (30) liegen, der dem zugehörigen Rotor (52) zugewandt ist, wobei wenigstens eine Spule (1) in diese Einkerbungen (31) hineingeschachtelt ist.

14. Motor (50) nach Anspruch 12, **dadurch gekennzeichnet, dass** die wenigstens eine Spule (1) in ein isolierendes Bindemittel gegossen und in dem oder den Statoren (40) untergebracht ist und dadurch, dass der oder die Rotoren (52) Dauermagneten besitzen und aus Glasfaser ausgeführt sind.

15. Verwendung eines Motors oder Generator nach einem der Ansprüche 12 bis 14, **dadurch gekennzeichnet, dass** sie in Kombination mit einem geschlossenen Raum stattfindet, wobei der Motor oder Generator inneralb oder außerhalb des Raums antergebracht ist, wobei sich des Motor oder Generator in Vakkum oder unter einem Druck oberhalb von 2 Bar oder auf einer Temperatur unterhalb von 0 °C oder oberhalb von 60 °C befindet.

## Claims

1. Method for manufacturing a winding (1) for a stator element of an electromagnetic motor or generator with permanent magnets, the winding comprising at least two conductive branches (10, 10', 10") each corresponding to a phase of an electric current, said at least two branches (10, 10', 10") being rigid and manufactured from the same blank of at least one material by removal of material (10, 10', 10"), **characterised in that** the removal of material is done so as to produce crenellations on the branches with tops and lateral segments of the crenellations of the same branch (10, 10', 10") lying in the same plane, the planes of the branches (10, 10', 10") thus defined being superimposed, a first branch (10) having the tops (15, 15a) of its crenellations at a level higher than the plane comprising the tops (15', 15") of the crenellations of a second branch (10', 10") with an offset on a periphery of the winding between the crenellations of one branch (10) with respect to the other (10', 10"), the first branch (10) having the bases (14) of its crenellations at a lower level on the winding (1) than that of the bases (14', 14") of the crenellations of the second branch (10', 10"), all the crenellations forming the body of the branch (10, 10', 10").

2. Manufacturing method according to the preceding claim, which is done by numeric-control machining or electroerosion.

3. Winding (1) comprising at least two interlaced conductive branches (10, 10', 10") each corresponding to a phase of an electric current, each of the branches (10, 10', 10") being rigid and in a single piece, the winding being obtained in accordance with the method according to any one of the preceding two claims, each of the branches (10, 10', 10") being formed by crenellations, each crenellation comprising a top (15, 15a, 15b, 15', 15") framed by at least one lateral segment (16, 16a, 16b, 16', 16") at each of its ends and a base (14, 14', 14") connecting the crenellation to an adjacent crenellation of the branch (10, 10', 10"), each lateral segment (16, 16a, 16b, 16', 16") connecting an end part of the top (15, 15a, 15b, 15', 15") to an end part of the base (14, 14', 14"), an offset on a periphery of the winding existing between the crenellations of one branch (10) with respect to the other (10', 10"), **characterised in that** the tops and the lateral segments of the same branch (10, 10', 10") lie in the same plane, the planes of the branches (10, 10', 10") thus defined being superimposed, a first branch (10) having the tops (15, 15a) of its crenellations at a level higher than the plane comprising the tops (15', 15") of the crenellations of a second branch (10', 10"), the first branch (10) having the bases (14) of its crenellations at a lower level on the winding (1) than that of the bases (14', 14") of the crenellations of the second branch (10', 10"), all the crenellations forming the body of the branch (10, 10', 10").

4. Winding (1) according to claim 3, **characterised in that** it comprises n branches (10, 10', 10") that are rigid and in a single piece, with, for x greater than 1 and less than n, the x^{th} branch (10, 10', 10") having its tops (15, 15a, 15b, 15', 15") at a level higher than that of the tops (15, 15a, 15b, 15', 15") of the x+1^{th} branch (10, 10', 10") and at a level lower than that of the tops (15, 15a, 15b, 15', 15") of the x-1^{th} branch (10, 10', 10"), the bases (14, 14', 14") of the x^{th} branch (10, 10', 10") being at a level higher than that of the bases (14, 14', 14") of the x-1^{th} branch (10, 10', 10") and at a level lower than that of the bases (14, 14', 14") of the x+1^{th} branch (10, 10', 10").

5. Winding (1) according to claim 3 or claim 4, **characterised in that** each top of a top branch or each base of a bottom branch has a recess (18, 19) for the passage of a lateral segment of a crenellation of a bottom branch or respectively of a lateral segment of a crenellation of a top branch.

6. Winding (1) according to any one of claims 3 to 5, **characterised in that** the lateral segments (16, 16a, 16b, 16', 16") of the crenellations of the branches (10, 10', 10") are inclined in the direction of the height of the winding (1) towards the associated base (14, 14', 14") of the crenellations.

7. Winding (1) according to any one of claims 3 to 5, **characterised in that** the lateral segments (16, 16a, 16b, 16', 16") of the crenellations of the branches (10, 10', 10") are disposed in the same plane as the associated top (15, 15a, 15b, 15', 15") of the crenellations, an offset in level (20) being provided on each end of the base (14, 14', 14") for connection thereof with the facing end of the associated lateral segment (16, 16a, 16b, 16', 16").

8. Winding (1) according to any one of claims 3 to 7, **characterised in that**, at least for one crenellation, at least one auxiliary lateral segment (16a, 16b, 16c) is provided, connected to the same end of a top (15, 15a) as a lateral segment (16, 16', 16") forming part of the body of the branch (10, 10', 10").

9. Winding (1) according to claim 8, **characterised in that** said at least one auxiliary lateral segment (16a, 16b, 16c) is rigid and in one piece with the body of the branch (10, 10', 10") carrying it.

10. Winding (1) according to claim 8, **characterised in that** said at least one auxiliary lateral segment (16a, 16b, 16c) is connected by an attachment means to its associated top (15, 15a).

11. Winding (1) according to any one of the preceding three claims, **characterised in that** the lateral segments (16, 16a, 16b, 16c) associated with the same end have one or more of the following features: different cross sections, different orientations or different materials.

12. Electromagnetic motor or generator (50) with permanent magnets, comprising at least one rotor (52) and at least one stator (40), **characterised in that** it comprises at least one winding (1) according to any one of claims 3 to 11, the motor being either an axial-flow electromagnetic motor or generator (50), said at least one winding (1) having the form of a cylinder, or a radial-flow electromagnetic motor or generator, said at least one winding (1) having a ring form.

13. Motor (50) according to claim 12, **characterised in that** its stator or stators (40) comprise a flat ring (30) provided with notches (31) situated in the plane of the ring (30) facing the associated rotor (52), at least one winding (1) being nested in these notches (31).

14. Motor (50) according to claim 12, **characterised in that** said at least one winding (1) is moulded in an insulating binder and housed in the stator or stators (40) and **in that** the rotor or rotors (52) are of the permanent magnet type and produced from glass fibre.

15. Use of a motor or generator according to any of claims 12 to 14, **characterised in that** it takes place in association with a closed chamber, the motor or generator being placed inside or outside said chamber, the motor or generator being under vacuum or at a pressure greater than 2 bar or at a temperature below 0°C or above 60°.
